# EUROPÄISCHE PATENTSCHRIFT

(11) **EP 2 639 022 B1**
(45) Veröffentlichungstag und Bekanntmachung des Hinweises auf die Patenterteilung: **29.06.2016**
(21) Anmeldenummer: 13159113.3
(22) Anmeldetag: 14.03.2013
(51) Int. Cl.: B26D 1/30

(54) **Eckenputzvorrichtung**
Device for cleaning corners
Dispositif de nettoyage d'angle

(30) Priorität: 15.03.2012 DE 202012100935 U
(43) Veröffentlichungstag der Anmeldung: 18.09.2013
(73) Patentinhaber: Rotox Besitz- und Verwaltungsgesellschaft mbH, 65611 Brechen (DE)
(72) Erfinder: Schön, Christoph, 65606 Villmar - Aumenau (DE); Niewrzoll, Christof, 65620 Waldbrunn (DE)
(74) Vertreter: Müller, Eckhard

(56) Entgegenhaltungen:
- EP-A1- 1 543 906
- DE-A1-102007 014 532
- US-A- 3 372 479
- US-A- 3 888 003
- US-A1- 2005 115 081

## Beschreibung

Die Erfindung betrifft eine Eckenputzvorrichtung mit wenigstens einem Bearbeitungswerkzeug zum Bearbeiten der Ecken eines aus Profilstäben, insbesondere Kunststoffprofilstäben, zusammengeschweißten Rahmens.

Die Herstellung von Rahmen für Fenster oder Türen, sowohl von Flügelrahmen, als auch von Blendrahmen, erfolgt zumeist durch miteinander Verschweißen von auf Gehrung geschnittenen Profilstäben. Diese können insbesondere aus Kunststoff, beispielsweise aus PVC, bestehen. Eine Vorrichtung zur Herstellung von Rahmen ist beispielsweise aus DE 195 06 236 A1 bekannt. Diese Vorrichtung weist vier Schweißköpfe zum gleichzeitigen Herstellen der vier Eckverbindungen eines Rahmens auf.

Bei den aus dem Stand der Technik bekannten Schweißvorrichtungen werden die zu verschweißenden Profilstäbe zunächst eingelegt und mit Hilfe von Anschlägen und Führungen positioniert. Anschließend erfolgt der Schritt des Angleichens, indem die Profilstabenden gegen einen heißen Heizspiegel gedrückt werden, wobei Material geschmolzen und verdrängt wird. Dieser Vorgang endet, wenn ein genau vorgegebener Angleichweg zurückgelegt ist, was mit Hilfe eines ersten Anschlags, der den Verfahrweg begrenzt, sichergestellt wird. Anschließend erfolgt das sog. Anwärmen.

Nach dem Anwärmen erfolgt das sog. Umstellen, bei dem die Profilstabenden von dem Heizspiegel entfernt werden und der Heizspiegel aus dem Schweißbereich herausgefahren wird.

Nach dem Umstellen erfolgt das sog. Fügen, bei dem die Profilstabenden entlang dem sog. Fügeweg, aufeinander zu bewegt und gegeneinander gefügt werden. Beim Fügen wird weiteres Material verdrängt. Hierbei quillt aufgeschmolzenes Material auch nach Außen, so dass die Ecken nach dem Verschweißen nachbearbeitet werden müssen. Hierfür werden sog. Eckenputzmaschinen eingesetzt.

Beispielsweise aus DE 10 2008 016 228 A1, DE 41 30 085 A1, EP 1 199 146 A2 und aus DE 33 43 787 A1 sind Eckenputzmaschinen in unterschiedlichen Ausführungsformen bekannt. Zum Bearbeiten der Schweißraupen ist zumeist eine Art Stechbeitel vorgesehen.

In DE 41 30 085 A1 wird die Verwendung eines Profil- oder Scheibenfräsers vorgeschlagen.

Zur Herstellung von Rahmen, insbesondere von Flügelrahmen, werden einerseits Profilstäbe verwendet, die eine Nut aufweisen, in die nach Herstellung des Rahmens eine elastische Dichtung, beispielsweise eine Gummidichtung, eingesteckt werden kann. Zumeist dient die Dichtung dazu, im geschlossenen Zustand eines Fensters bzw. einer Tür, den Spalt zwischen den Blendrahmen und dem Flügelrahmen abzudichten.

Es werden jedoch andererseits auch Profilstäbe miteinander verschweißt, die bereits vor dem Vorgang des Verschweißens eine - beispielsweise anextrudierte oder eingezogene oder eingerollte - Dichtung aufweisen. Solche Profilstäbe sind beispielsweise aus EP 0 167 084 B1 bekannt Beispielsweise kann eine solche Dichtung mit einer Art Keder versehen sein, so dass sie in eine Kedernut des Profilstabes eingeschoben oder eingezogen werden kann.

Bei der Verarbeitung solcher Profilstäbe entsteht beim Schweißvorgang auch im Bereich dieser Dichtungen ein Überstand und/oder eine Schweißraupe. Dieser Überstand bzw. diese Schweißraupe können mit den aus dem Stand der Technik bekannten Eckenputzvorrichtungen gar nicht oder zumindest nicht in befriedigender Qualität bearbeitet werden.

Aus der DE 10 2007 014 532 A1 ist eine Vorrichtung mit einem Bearbeitungswerkzeug zum Bearbeiten des Eckbereichs von aus Profilstücken geschweißten Fenster- oder Türrahmen bekannt. Das Bearbeitungswerkzeug ist mittels eines in zumindest einer Achse parallel zur Rahmenebene und in einer Achse senkrecht hierzu verfahrbaren Werkzeugträgers in die jeweilige Bearbeitungsposition an den Eckbereich des Rahmens verfahrbar. Mit dem Werkzeugträger ist ein seitlich davon angeordneter weiterer Werkzeugträger für wenigstens ein zur Bearbeitung des Profilschenkels ausgebildetes Bearbeitungswerkzeug verfahrbar, wobei der weitere Werkzeugträger zumindest in einer weiteren Achse verfahrbar ist, welche in Diagonalrichtung des Rahmens verläuft.

Es ist die Aufgabe der vorliegenden Erfindung, eine Eckenputzvorrichtung anzugeben, mit der ein, insbesondere auch ein automatisches, Bearbeiten des die Dichtungen betreffenden Teils einer Eckverbindung möglich ist.

Die Aufgabe wird durch eine Eckenputzvorrichtung mit den Merkmalen des Anspruchs 1 gelöst. Vorteilhafte Ausgestaltungen der Erfindung ergeben sich aus den Unteransprüchen sowie der nachfolgenden Beschreibung und der Figuren.

In erfindungsgemäßer Weise wurde erkannt, dass ein Bearbeiten der Verbindung der zumeist sehr elastischen Dichtungen mit den üblichen Bearbeitungswerkzeugen, insbesondere durch Abstechen oder Fräsen, nicht zu befriedigenden Ergebnissen führt, insbesondere weil das Dichtungsmaterial der Krafteinwirkung ausweicht bzw. durch die Bearbeitungswerkzeuge zerstört wird. Dieses Problem ist erfindungsgemäß durch die Verwendung eines pneumatischen Seitenschneiders als Bearbeitungswerkzeug weitgehend vollständig gelöst.

Erfindungsgemäß ist das Bearbeitungswerkzeug als pneumatischer Seitenschneider ausgebildet.

Das Bearbeitungswerkzeug ist in Bezug auf seine Positionierung motorisch angetrieben. Alternativ oder zusätzlich kann vorteilhaft vorgesehen sein, dass das Bearbeitungswerkzeug in Bezug auf seine Bearbeitungsfunktion, insbesondere eine Schneid- und/oder Trennfunktion, motorisch angetrieben ist. Insbesondere kann vorgesehen sein, dass wenigstens eine Schneide des Bearbeitungswerkzeugs motorisch angetrieben ist.

Bei einer besonders vielseitig einsetzbaren Ausführung ist das Bearbeitungswerkzeug relativ zu einer, insbesondere durch wenigstens einen Anschlag definierten, Aufnahme für eine zu bearbeitende Ecke beweglich angeordnet. Insbesondere kann vorgesehen sein, dass das Bearbeitungswerkzeug - beispielsweise mithilfe eines oder mehrerer Verschiebeschlitten - in wenigstens einer Raumrichtung, insbesondere in X-, Y- und Z Richtung, verschiebbar angeordnet ist. Alternativ oder zusätzlich kann auch vorgesehen sein, dass das Bearbeitungswerkzeug drehbar und/oder verschwenkbar angeordnet ist.

Die vorgenannten Ausführungsformen haben insbesondere den Vorteil, dass das Bearbeitungswerkzeug präzise - insbesondere auch automatisch gesteuert - in seine Bearbeitungsposition verbracht werden kann. Durch die besondere Beweglichkeit ist gewährleistet, dass die Eckenputzvorrichtung - insbesondere mit einer Steuerungsvorrichtung automatisch gesteuert - universell einsetzbar an unterschiedliche Ausprägungen der Profilstäbe, insbesondere bezüglich Form und Größe, angepasst agieren kann.

Bei einer besonderen Ausführungsform ist vorgesehen, dass das Bearbeitungswerkzeug relativ zu einer, insbesondere durch wenigstens einen Anschlag definierten, Aufnahme für eine zu bearbeitende Ecke motorisch angetrieben beweglich angeordnet ist. Insbesondere kann vorteilhaft vorgesehen sein, dass das Bearbeitungswerkzeug - insbesondere motorisch angetrieben und/oder motorisch gesteuert - von einer Ruheposition in eine Bearbeitungsposition bewegbar ist.

Bei einer besonders universell, insbesondere für unterschiedliche Formen von Profilstäben und/oder Dichtungen, einsetzbaren Ausführung führt die Eckenputzvorrichtung während eines Schneid- und/oder Trennvorganges eine Relativbewegung zwischen der zu bearbeitenden Ecke und dem Bearbeitungswerkzeug aus. Hierdurch können besonders präzise Schnitte erreicht werden. Ein ganz besonderer Vorteil einer solchen Ausführung besteht jedoch darin, dass der Schnittverlauf an den Verlauf der Außenseite der miteinander verschweißen Dichtungen angepasst verlaufen kann. Beispielsweise kann bei Dichtungen, die konvex gewölbt sind auch ein konvexer Schnittverlauf vorgenommen werden. Insbesondere kann vorgesehen sein, dass das Bearbeitungswerkzeug während eines Schneid- und/oder Trennvorganges eine Relativbewegung, insbesondere eine Kippbewegung relativ zu der zu bearbeitenden Ecke ausführt.

Es kann eine Steuerungsvorrichtung vorgesehen sein, die das Bearbeitungswerkzeug steuert. Insbesondere kann vorgesehen sein, dass die Steuerungsvorrichtung die Positionierung und/oder Ausrichtung des Bearbeitungswerkzeuges, beispielsweise relativ zu der zu bearbeitenden Ecke, steuert. Alternativ oder zusätzlich kann auch vorgesehen sein, dass die Steuerungsvorrichtung die Bearbeitungsfunktion des Bearbeitungswerkzeuges steuert.

Eine automatische Bearbeitung der Ecken eines Rahmens ist insbesondere bei einer Ausführungsform ermöglicht, bei der die Steuerungsvorrichtung, insbesondere automatisch, das Bearbeitungswerkzeuges relativ zu einer zu bearbeitenden Ecke in eine Bearbeitungsstellung bewegt.

Bei einer besonderen Ausführungsform steuert die Steuerungsvorrichtung die Position und/oder die Bearbeitungsfunktion des Bearbeitungswerkzeugs in Abhängigkeit von der Position und/oder der Form und/oder der Größe und/oder des Typs der verschweißten Profilstäbe.

In Bezug auf die vorgenannten Ausführungsformen kann beispielsweise vorgesehen sein, dass die Steuerungsvorrichtung eine Speichereinheit aufweist, in der für unterschiedliche Rahmen und/oder unterschiedliche Profilstäbe und und/oder unterschiedliche Profilgrößen und/oder unterschiedliche Profilformen jeweils eine zugehörige Bearbeitungsstellung abgelegt ist. Bei einer solchen Vorrichtung weiß die Steuerungsvorrichtung, wo das Bearbeitungswerkzeug jeweils zu positionieren und/oder auszurichten ist und/oder wie die Bearbeitung zu erfolgen hat.

Es kann vorgesehen sein, dass der Benutzer der Steuerungsvorrichtung den Typ und/oder die Größe und/oder die Form der Ecke bzw. der Profilstäbe durch Dateneingabe, beispielsweise mittels einer Tastatur oder mit Hilfe eines Barcodelesers, mitteilt. Bei einer ganz besonders vorteilhaften Ausführung ist vorgesehen, dass die Steuerungsvorrichtung diese Parameter, beispielsweise durch mechanisches oder optisches Abtasten der jeweils zu bearbeitenden Ecke selbsttätig ermittelt.

Bei einer besonderen Ausführung ist eine Sensorvorrichtung zum Ermitteln der Position und/oder der Form und/oder der Größe und/oder des Typs der verschweißten Profilstäbe und/oder Ecken vorgesehen. Beispielsweise kann die Sensorvorrichtung hierzu wenigstens einen Tastfühler aufweisen. Es kann auch vorgesehen sein, dass die Sensorvorrichtung einen optischen Sensor aufweist.

Wie bereits erläutert, kann das Bearbeitungswerkzeug dazu ausgebildet und angeordnet sein, die Ecken von Profilstäben, die bereits vor dem Schweißvorgang Dichtungen aufwiesen, zu bearbeiten. Insbesondere kann vorgesehen sein, dass das Bearbeitungswerkzeug dazu ausgebildet und angeordnet ist, die Schweißraupen und/oder Überstände von, insbesondere elastischen, Dichtungen der verschweißten Profilstäbe zu bearbeiten oder zu entfernen.

Die Schneiden können eine insbesondere an die Form der zu bearbeitenden Dichtung und/oder an den Verlauf der gewünschten Schnittlinie angepasste Form aufweisen. Beispielsweise kann vorgesehen sein, dass wenigstens eine der Schneiden des Bearbeitungswerkzeuges gerade ist oder dass die Schneiden des Bearbeitungswerkzeuges gerade sind.

Es kann jedoch auch vorgesehen sein, dass sich die Scheiden während des Schneid- bzw. Trennvorganges in einer Schneidebene bewegen und dass wenigstens eine der Schneiden des Bearbeitungswerkzeuges in der Schneidebene gebogen und/oder abgewinkelt ist.

Insbesondere zum Bewirken eines gebogenen Schnittverlaufs kann vorgesehen sein, dass sich die Scheiden während des Schneid- bzw. Trennvorganges in einer Schneidebene bewegen und die Schneiden des Bearbeitungswerkzeuges senkrecht zur Schneidebene gebogen sind.

Die erfindungsgemäße Eckenputzvorrichtung kann, beispielsweise durch die besondere Form der Schneiden und/oder durch die Beweglichkeit des Bearbeitungswerkzeugs (insbesondere auch während des Schneid- bzw. Trennvorganges) dazu ausgebildet sein, sämtliche in der Praxis auftretende Arten und Formen von Dichtungen an unterschiedlichen Orten der Profilstäbe zu bearbeiten. Insbesondere ist es möglich, Innendichtungen, Außendichtungen, Anschlagdichtungen, Glasdichtungen und/oder Mitteldichtungen zu bearbeiten.

Bei einer besonders universell, insbesondere für unterschiedliche Formen und Größen von Ecken, einsetzbaren Ausführung der erfindungsgemäßen Eckenputzvorrichtung ist wenigstens ein zweites Bearbeitungswerkzeug vorgesehen. Das zweite Bearbeitungswerkzeug kann insbesondere als zweite Schere oder als zweite Trennzange ausgebildet sein.

Insbesondere kann vorgesehen sein, dass das Bearbeitungswerkzeug zur Bearbeitung der Ecken einer ersten Form und/oder einer ersten Größe und/oder eines ersten Typs ausgebildet und angeordnet ist und dass das zweite Bearbeitungswerkzeug zur Bearbeitung der Ecken einer zweiten, von der ersten verschiedenen Form und/oder einer zweiten, von der ersten verschiedenen Größe und/oder eines zweiten, von der ersten verschiedenen Typs ausgebildet und angeordnet ist.

In vorteilhafter Weise kann außer dem Bearbeitungswerkzeug und gegebenenfalls außerdem zweiten Bearbeitungswerkzeug ein weiteres Bearbeitungswerkzeug vorhanden sein. Hierbei kann es sich beispielsweise um einen Fräser oder einen Schaber oder einen Stechbeitel handeln.

Bei einer besonderen Ausführung sind das Bearbeitungswerkzeug und ggf. das zweite Bearbeitungswerkzeug dazu ausgebildet und angeordnet, die Schweißraupen und/oder Überstände von, insbesondere elastischen, Dichtungen der verschweißten Profilstäbe zu bearbeiten oder zu entfernen, während das weitere Bearbeitungswerkzeug dazu ausgebildet und angeordnet ist, die Schweißraupen der Eckverbindung der die Dichtungen tragenden Profilstäbe zu bearbeiten. Eine solche Ausführung hat den ganz besonderen Vorteil, dass die Schweißverbindung einer Ecke sowohl im Bereich der Dichtungen, als auch im Bereich der die Dichtungen tragenden Profilstäbe - vorzugsweise automatisch - bearbeitet werden kann.

Weitere Ziele, Vorteile, Merkmale und Anwendungsmöglichkeiten der vorliegenden Erfindung ergeben sich aus der nachfolgenden Beschreibung mehrerer Ausführungsbeispiele anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

In der Zeichnung ist der Erfindungsgegenstand schematisch dargestellt und wird anhand der Figuren nachfolgend beschrieben, wobei gleiche oder gleich wirkende Elemente zumeist mit denselben Bezugszeichen versehen sind. Dabei zeigen:
- Fig. 1: schematisch ein Ausführungsbeispiel einer erfindungsgemäßen Eckenputzvorrichtung einmal unmittelbar vor und einmal unmittelbar nach der Bearbeitung einer Dichtungen aufweisenden Ecke eines Flügelrahmens,
- Fig. 2: das bereits in Fig. 1 dargestellte Ausführungsbeispiel aus einer anderen Blickrichtung,
- Fig. 3: schematisch ein Ausführungsbeispiel der erfindungsgemäßen Eckenputzvorrichtung einmal unmittelbar vor und einmal unmittelbar nach der Bearbeitung einer Dichtungen, beispielsweise Anschlagdichtungen, aufweisenden Ecke eines Blendrahmens,
- Fig. 4: das bereits in Fig. 3 dargestellten Situationen unmittelbar nach der Bearbeitung einer Ecke mit beispielsweise einer Mitteldichtung und
- Fig. 5: ein weiteres Ausführungsbeispiel einer erfindungsgemäßen Eckenputzvorrichtung.

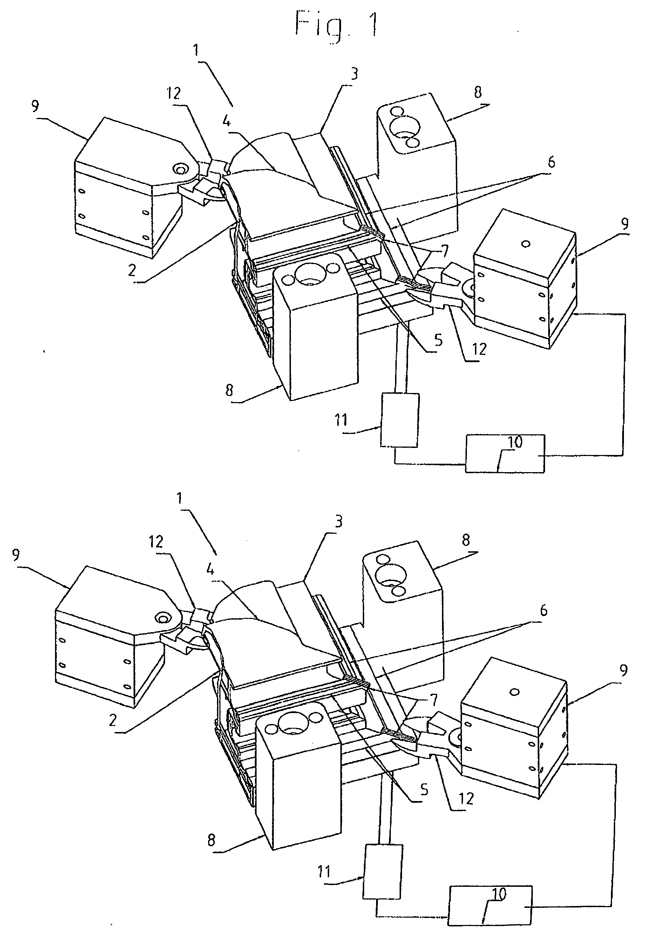

Fig. 1 zeigt in zwei Darstellungen ein Ausführungsbeispiel einer erfindungsgemäßen Eckenputzvorrichtung. Die obere Darstellung zeigt die Eckenputzvorrichtung unmittelbar vor der Bearbeitung einer Dichtungen 6 aufweisenden Ecke 1 eines Flügelrahmens. Die Ecke 1 ist durch das Verschweißen eines ersten Profilstabes 2 und eines zweiten Profilstabes 3 gebildet, wobei die Schweißverbindung eine Schweißnaht 4 aufweist. Der erste Profilstab 2 weist mehrere erste anextrudierte Dichtungen 5 auf, die sich parallel zu seiner Längserstreckung erstrecken. Der zweite Profilstab 3 weist parallel zu seiner Längserstreckung mehrere zweite anextrudierte Dichtungen 6 auf. Durch den Schweißvorgang hat sich jeweils im Bereich des Kontaktes zwischen den ersten anextrudierten oder eingerollten Dichtungen 5 und den zweiten anextrudierten oder eingerollten Dichtungen 6 jeweils eine überstehende Schweißwulst 7 gebildet.

Die Ecke 1 befindet sich in einer Aufnahme, die durch Anschläge 8 definiert ist. Es sind zwei Bearbeitungswerkzeugen 9 vorgesehen, die unabhängig voneinander relativ zu der Aufnahme in drei zueinander senkrechten Raumrichtungen verschiebbar und zusätzlich um zwei (nicht dargestellte) Achsen drehbar angeordnet ist. Für eine einfachere Ausführung kann es ausreichend sein, wenn lediglich eine Verschiebbarkeit in einer Richtung und ggf. eine Einstellbarkeit des Neigungswinkels vorgesehen ist.

Die Bearbeitungswerkzeuge 9 sind Trennzangen 12 ausgebildet. Es ist jedoch auch möglich, wenigstens eines der Bearbeitungswerkzeuge 9 als Schere auszubilden. Insbesondere kann das Bearbeitungswerkzeug 9 als pneumatischer Seitenschneider ausgebildet sein.

Es ist eine elektronische Steuerungsvorrichtung 10 vorgesehen, die von einer die Ecke 1 erfassenden Sensorvorrichtung 11 Information über Typ, Größe und Form der miteinander verschweißten Profilstäbe und über die Eckverbindung erhält. Unter Berücksichtigung dieser Informationen steuert die Steuerungsvorrichtung 10 die Position und/oder Ausrichtung und/oder die Bearbeitungsfunktion der Bearbeitungswerkzeuge 9, was der besseren Übersichtlichkeit wegen lediglich in Bezug auf eines der Bearbeitungswerkzeuge 9 schematisch angedeutet ist.

Zunächst wird das Bearbeitungswerkzeug 9 in eine Bearbeitungsstellung, in der die überstehende Schweißwülste 7 abgetrennt werden können. Anschließend werden die überstehenden Schweißwülste 7 - gesteuert durch die Steuerungsvorrichtung 10 - durch Gegeneinanderschwenken der Schneiden der Trennzangen 12 mit der Trennzange 12 abgetrennt. Danach werden die Bearbeitungswerkzeuge 9 jeweils wieder in ihre Ruhestellung überführt. Die untere Darstellung der Fig. 1 zeigt die Eckenputzvorrichtung unmittelbar nach dem Abtrennen der überstehenden Schweißwülste 7.

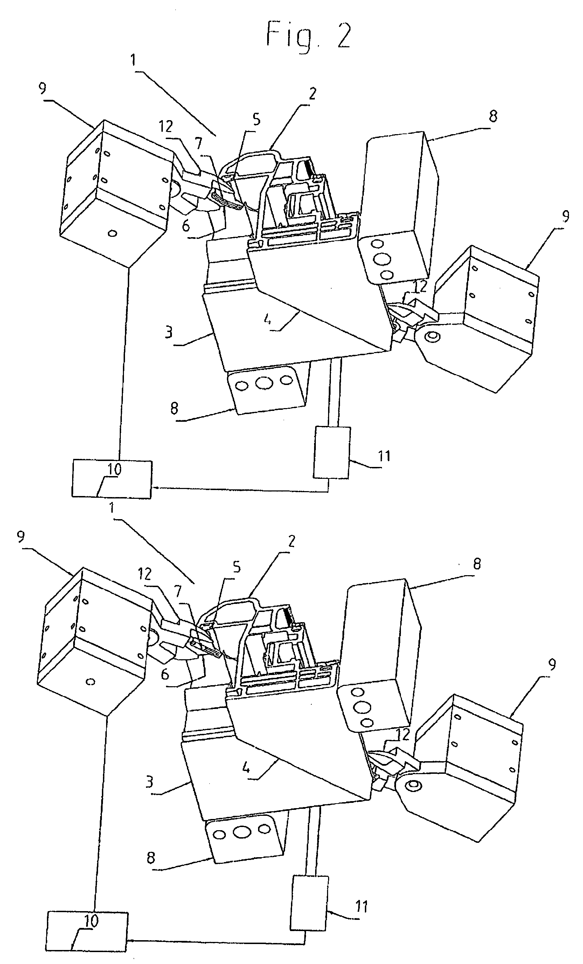

Fig. 2 zeigt den Vorgang des Abtrennens aus einer anderen Blickrichtung, wobei die obere Darstellung die Eckenputzvorrichtung unmittelbar vor der Bearbeitung der Dichtungen 6 zeigt, während die untere Darstellung die Eckenputzvorrichtung unmittelbar nach dem Abtrennen der überstehenden Schweißwülste 7 zeigt.

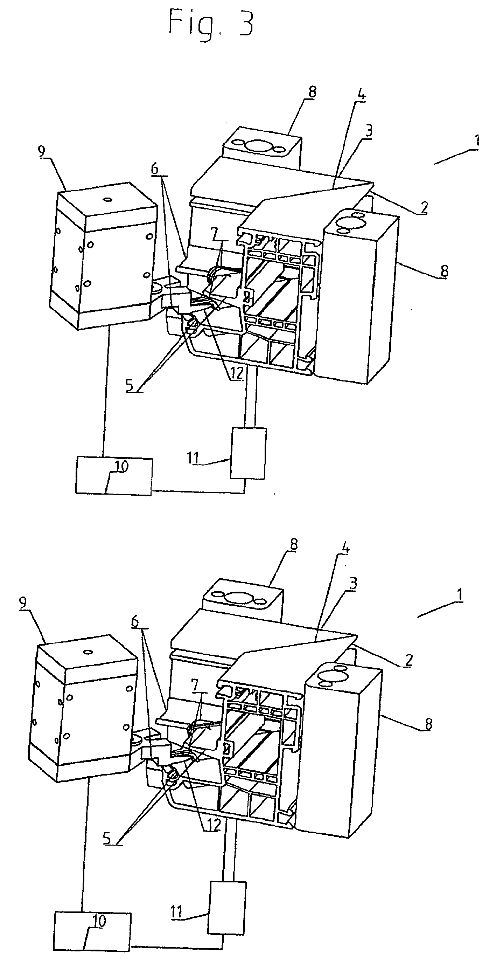

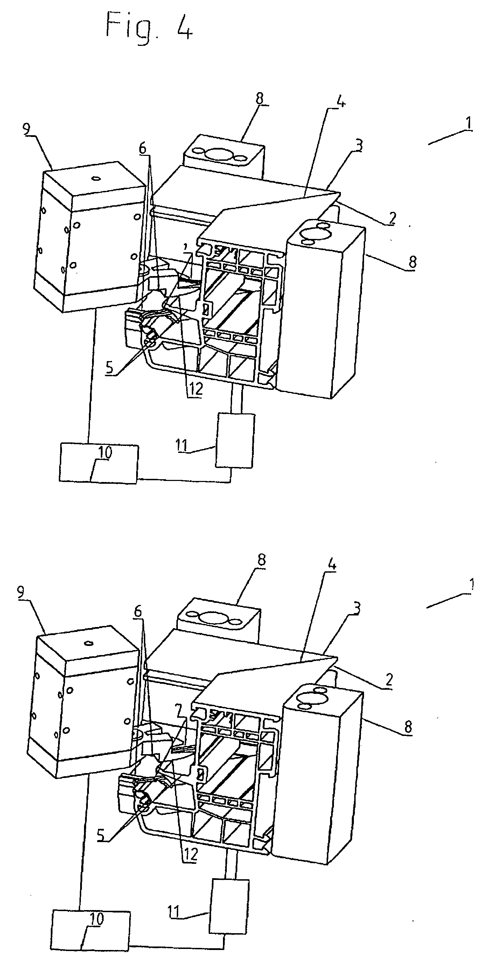

Dieselbe Eckenputzvorrichtung kann auch zum Bearbeiten der Ecke 1 eines Blendrahmens eingesetzt werden. Die Steuerungsvorrichtung stellt die Bearbeitungswerkzeuge 9 hinsichtlich ihrer Positionierung und hinsichtlich ihrer Ausrichtung auf Grund der von der Sensorvorrichtung 11 übermittelten Information auf die gegenüber dem Flügelrahmen verschiedenen Größe und Form der Blendrahmen-Ecke 1 ein. Dies ist in den Figuren 3 und 4 dargestellt, wobei die obere Darstellung die Eckenputzvorrichtung unmittelbar vor der Bearbeitung der Dichtungen 6 des Flügelrahmens zeigt, während die untere Darstellung die Eckenputzvorrichtung unmittelbar nach dem Abtrennen der überstehenden Schweißwülste 7 zeigt.

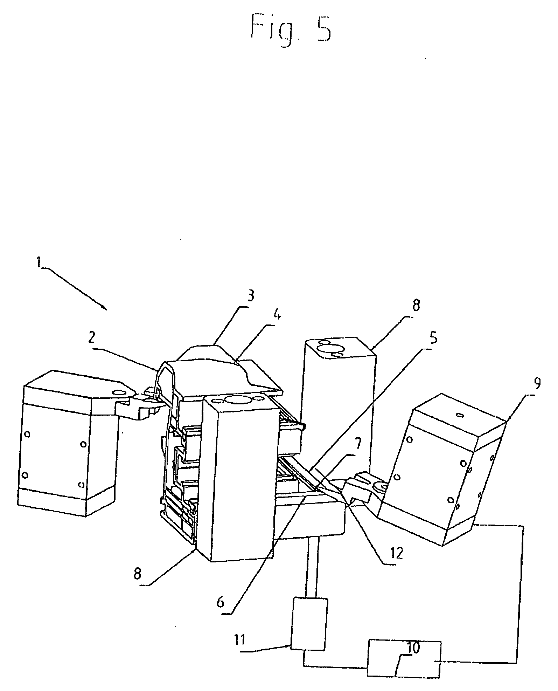

Figur 5 zeigt ein weiteres Ausführungsbeispiel einer erfindungsgemäßen Eckenputzvorrichtung, die im grundsätzlichen Aufbau weitgehend der in Figur 1 gezeigten Eckenputzvorrichtung entspricht.

Bei der in Figur 5 dargestellten Eckenputzvorrichtung ist vorgesehen, dass wenigstens eine der Bearbeitungswerkzeuge 9 während des Bearbeitungsvorganges, also während sich die Schneiden der Trennzange 12 aufeinander zu bewegen, eine Kipp- und/oder Schwenkbewegung in der Ebene ausführt, in der sich die Schweißnaht 4 der Profilstäbe 1 und 3 befindet. Auf diese Weise kann der Verlauf der Schnittlinie besonders gut der Außenkontur der Dichtungen 5, 6 angepasst werden. Dies ist in der Figur durch die gekippte Stellung des in der Figur rechts dargestellten Bearbeitungswerkzeugs 9 angedeutet.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Ecke
- 2: Erster Profilstab
- 3: Zweiter Profilstab
- 4: Schweißnaht
- 5: erste anextrudierte oder eingerollte Dichtung
- 6: zweite anextrudierte oder eingerollte Dichtung
- 7: überstehende Schweißwulst
- 8: Anschläge
- 9: Bearbeitungswerkzeug
- 10: Steuerungsvorrichtung
- 11: Sensorvorrichtung
- 12: Trennzange

## Patentansprüche

1. Eckenputzvorrichtung mit einer durch Anschläge (8) definierten Aufnahme für eine Ecke (1) und mit wenigstens einem Bearbeitungswerkzeug (9) zum Bearbeiten der Ecken (1) eines aus Profilstäben (2, 3) eines Kunststoffprofils zusammengeschweißten Rahmens, wobei die Position des Bearbeitungswerkzeuges (9) mittels einer Steuervorrichtung (10) steuerbar ist, **dadurch gekennzeichnet, dass** das Bearbeitungswerkzeug (9) als pneumatische Seitenschneider ausgebildet ist und der Seitenschneider motorisch angetrieben von einer Ruheposition in eine Bearbeitungsposition bewegbar ist.

2. Eckenputzvorrichtung nach Anspruch 1, **dadurch gekennzeichnet, dass** das Bearbeitungswerkzeug (9) relativ zur ,Aufnahme für eine zu bearbeitende Ecke (1) verschiebbar oder neigbar angeordnet ist.

3. Eckenputzvorrichtung nach einem der Ansprüche 1 oder 2, **dadurch gekennzeichnet, dass** das Bearbeitungswerkzeug (9) während eines Schneid- oder Trennvorganges eine Relativbewegung, insbesondere eine Kippbewegung relativ zu der zu bearbeitenden Ecke (1) ausführt.

4. Eckenputzvorrichtung nach einem der vorhergehenden Ansprüche, **dadurch gekennzeichnet, dass** die Steuerungsvorrichtung (10) die Position des Bearbeitungswerkzeuges (9) in Abhängigkeit von der Position, Form, Größe oder des Typs der verschweißten Profilstäbe (2, 3) steuert.

5. Eckenputzvorrichtung nach einem der vorhergehenden Ansprüche, **dadurch gekennzeichnet, dass** die Steuerungsvorrichtung (10) die Position, Form, Größe oder den Typ der zu bearbeitenden Ecke (1) automatisch ermittelt.

6. Eckenputzvorrichtung nach einem der vorhergehenden Ansprüche, **gekennzeichnet, durch** eine Sensorvorrichtung (11) zum Ermitteln der Position, Größe oder des Typs der verschweißten Profilstäbe (2, 3).

7. Eckenputzvorrichtung nach Anspruch 6, **dadurch gekennzeichnet, dass** die Sensorvorrichtung (11) wenigstens einen Tastfühler oder einen optischen Sensor aufweist.

8. Eckenputzvorrichtung nach einem der vorhergehenden Ansprüche, **dadurch gekennzeichnet, dass** die Schneiden des Bearbeitungswerkzeuges (9) gerade sind und sich während des Schneid- bzw. Trennvorganges in einer Schneidebene bewegen.

9. Eckenputzvorrichtung nach einem der vorhergehenden Ansprüche 1 bis 7, **dadurch gekennzeichnet, dass** wenigstens eine der Schneiden des Bearbeitungswerkzeuges (9) in der Schneidebene gebogen oder abgewinkelt ist.

10. Eckenputzvorrichtung nach einem der vorhergehenden Ansprüche, **dadurch gekennzeichnet, dass** das Bearbeitungswerkzeug (9) dazu ausgebildet und angeordnet ist, die Ecken (1) von Profilstäben, die bereits vor dem Schweißvorgang elastische Dichtungen aufweisen, zu bearbeiten.

11. Eckenputzvorrichtung nach einem der Ansprüche 1 bis 10, **dadurch gekennzeichnet, dass** wenigstens ein zweites Bearbeitungswerkzeug (9) vorgesehen ist, wobei das zweite Bearbeitungswerkzeug (9) als Schere oder als Trennzange (12) ausgebildet ist.

12. Eckenputzvorrichtung nach Anspruch 11, **dadurch gekennzeichnet, dass** das Bearbeitungswerkzeug (9) zur Bearbeitung der Ecken (1) einer ersten Form, Größe oder Typs ausgebildet und angeordnet ist und dass das zweite Bearbeitungswerkzeug (9) zur Bearbeitung der Ecken (1) einer zweiten, von der ersten verschiedenen Form, Größe oder Typs ausgebildet und angeordnet ist.

13. Eckenputzvorrichtung nach einem der vorhergehenden Ansprüche, **dadurch gekennzeichnet, dass** außer einem zweiten Bearbeitungswerkzeug (9) ein weiteres Bearbeitungswerkzeug (9) vorhanden ist, wobei dieses weitere Bearbeitungswerkzeug (9) als Fräser oder als Schaber oder als Stechbeitel ausgebildet ist.

14. Eckenputzvorrichtung nach Anspruch 13, **dadurch gekennzeichnet, dass** das Bearbeitungswerkzeug (9) und gegebenenfalls das zweite Bearbeitungswerkzeug (9) dazu ausgebildet und angeordnet sind, die Schweißraupen oder Überstände von elastischen Dichtungen der verschweißten Profilstäbe (2, 3) zu bearbeiten oder zu entfernen, während das weitere Bearbeitungswerkzeug (9) dazu ausgebildet und angeordnet ist, die Schweißraupen der Eckverbindung der die Dichtung tragenden Profilstäbe (2, 3) zu bearbeiten.

## Claims

1. Device for cleaning corners, comprising a reception area for a corner (1) that is defined by end stops (8), and at least one processing tool (9) for processing the corners (1) of a frame that is welded together from profiled bars (2, 3) of a plastic profile, wherein the position of the processing tool (9) can be controlled by means of a control device (10), **characterized in that** the processing tool (9) is designed as pneumatic diagonal cutters and **in that** the diagonal cutter can be moved from a resting position to a processing position in a motor-driven manner.

2. Device for cleaning corners according to claim 1, **characterized in that** the processing tool (9) is arranged so as to be slidable or tiltable relative to a reception area for a corner (1) to be processed.

3. Device for cleaning corners according to claim 1 or 2, **characterized in that** the processing tool (9) performs a relative movement, in particular a tilting movement, relative to a corner (1) to be processed during a cutting or severing process.

4. Device for cleaning corners according to one of the preceding claims, **characterized in that** the control device (10) controls the position of the processing tool (9) depending on the position, shape, size or type of the welded profiled bars (2, 3).

5. Device for cleaning corners according to one of the preceding claims, **characterized in that** the control device (10) automatically determines the position, shape, size or type of the corner (1) to be processed.

6. Device for cleaning corners according to one of the preceding claims, **characterized by** comprising a sensor device (11) for determining the position, size or type of the welded profiled bars (2, 3).

7. Device for cleaning corners according to claim 6, **characterized in that** the sensor device (11) comprises at least one touch probe or an optical sensor.

8. Device for cleaning corners according to one of the preceding claims, **characterized in that** the cutting edges of the processing tool (9) are straight and move within a cutting plane during the cutting or severing process.

9. Device for cleaning corners according to one of the preceding claims 1 to 7, **characterized in that** at least one of the cutting edges of the processing tool (9) is bent or angled in the cutting plane.

10. Device for cleaning corners according to one of the preceding claims, **characterized in that** the processing tool (9) is designed and arranged to process the corners (1) of profiled bars which have elastic seals already before the welding process.

11. Device for cleaning corners according to one of the claims 1 to 10, **characterized in that** at least one second processing tool (9) is provided, wherein the second processing tool (9) is embodied as scissors or separating pliers (12).

12. Device for cleaning corners according to claim 11, **characterized in that** the processing tool (9) is embodied and arranged for processing the corners (1) of a first shape, size and type, and **in that** the second processing tool (9) is embodied and arranged for processing the corners (1) of a second shape, size and type that is different from the first one.

13. Device for cleaning corners according to one of the preceding claims, **characterized in that**, apart from a second processing tool (9), a further processing tool (9) is present, wherein this further processing tool (9) is designed as a milling cutter or a scraper or a mortise chisel.

14. Device for cleaning corners according claim 13, **characterized in that** the processing tool (9) and, if applicable, the second processing tool (9) are designed and arranged for processing or removing the welding beads or protrusions of elastic seals of the welded profiled bars (2, 3), while the further processing tool (9) is designed and arranged for processing the welding beads of the corner joint of the profiled bars (2, 3) that carry the seal.

## Revendications

1. Dispositif de nettoyage d'angle avec un logement défini par des butées (8) pour un angle (1) et avec au moins un outil d'usinage (9) pour l'usinage des angles (1) d'un châssis soudé composé de barres profilées (2, 3) d'un profilé en matière plastique, dans lequel la position de l'outil d'usinage (9) peut être commandée au moyen d'un dispositif de commande (10), **caractérisé en ce que** l'outil d'usinage (9) est configuré en un couteau de côté pneumatique et le couteau de côté entraîné par un moteur est déplaçable entre une position de repos et une position d'usinage.

2. Dispositif de nettoyage d'angle selon la revendication 1, **caractérisé en ce que** l'outil d'usinage (9) est agencé de façon déplaçable ou inclinable par rapport au logement destiné à un angle à usiner (1).

3. Dispositif de nettoyage d'angle selon l'une des revendications 1 ou 2, **caractérisé en ce que** l'outil d'usinage (9) exécute pendant une opération de coupe ou de séparation un mouvement relatif, en particulier un mouvement de basculement par rapport à l'angle à usiner (1).

4. Dispositif de nettoyage d'angle selon l'une quelconque des revendications précédentes, **caractérisé en ce que** le dispositif de commande (10) commande la position de l'outil d'usinage (9) en fonction de la position, de la forme, de la grandeur ou du type des barres profilées soudées (2, 3).

5. Dispositif de nettoyage d'angle selon l'une quelconque des revendications précédentes, **caractérisé en ce que** le dispositif de commande (10) détermine automatiquement la position, la forme, la grandeur ou le type de l'angle à usiner (1).

6. Dispositif de nettoyage d'angle selon l'une quelconque des revendications précédentes, **caractérisé par** un dispositif de détecteur (11) pour déterminer la position, la grandeur ou le type des barres profilées soudées (2, 3).

7. Dispositif de nettoyage d'angle selon la revendication 6, **caractérisé en ce que** le dispositif de détecteur (11) présente au moins un palpeur ou un détecteur optique.

8. Dispositif de nettoyage d'angle selon l'une quelconque des revendications précédentes, **caractérisé en ce que** les lames de l'outil d'usinage (9) sont droites et se déplacent dans un plan de coupe pendant l'opération de coupe ou de séparation.

9. Dispositif de nettoyage d'angle selon l'une quelconque des revendications 1 à 7, **caractérisé en ce qu'**au moins une des lames de l'outil d'usinage (9) est incurvée ou coudée dans le plan de coupe.

10. Dispositif de nettoyage d'angle selon l'une quelconque des revendications précédentes, **caractérisé en ce que** l'outil d'usinage (9) est conçu et agencé de façon à usiner les angles (1) de barres profilées, qui présentent déjà des joints d'étanchéité élastiques avant l'opération de soudage.

11. Dispositif de nettoyage d'angle selon l'une quelconque des revendications 1 à 10, **caractérisé en ce qu'**il est prévu au moins un deuxième outil d'usinage (9) sous forme de cisaille ou de pince coupante (12).

12. Dispositif de nettoyage d'angle selon la revendication 11, **caractérisé en ce que** l'outil d'usinage (9) est configuré et agencé pour l'usinage des angles (1) d'une première forme, grandeur ou d'un premier type et **en ce que** le deuxième outil d'usinage (9) est configuré et agencé pour l'usinage des angles (1) d'une deuxième forme, grandeur ou d'un deuxième type, différent(e) du premier ou de la première.

13. Dispositif de nettoyage d'angle selon l'une quelconque des revendications précédentes, **caractérisé en ce qu'**il se trouve un autre outil d'usinage (9), en plus d'un deuxième outil d'usinage (9), dans lequel cet autre outil d'usinage (9) est réalisé en forme de fraise ou de racloir ou de ciseau.

14. Dispositif de nettoyage d'angle selon la revendication 13, **caractérisé en ce que** l'outil d'usinage (9) et éventuellement le deuxième outil d'usinage (9) est conçu et agencé pour usiner ou éliminer les cordons de soudure ou les excédents de joints d'étanchéité élastiques des barres profilées soudées (2, 3), tandis que l'autre outil d'usinage (9) est conçu et agencé pour usiner les cordons de soudure de l'assemblage d'angle des barres profilées (2, 3) portant le joint d'étanchéité.
